# EUROPEAN PATENT APPLICATION

(11) **EP 4 358 205 A1**
(43) Date of publication of application: **24.04.2024**
(21) Application number: 22884001.3
(22) Date of filing: 19.10.2022
(51) Int. Cl.: H01M 10/04, H01M 50/595, H01M 50/586

(54) **ROLL-TYPE ELECTRODE BODY**

(30) Priority: 19.10.2021 KR 20210139078; 18.10.2022 KR 20220134010
(71) Applicant: LG Energy Solution, Ltd., Seoul 07335 (KR)
(72) Inventor: SEO, Sang Jin, Daejeon 34122 (KR); LEE, Jun Woo, Daejeon 34122 (KR); AHN, Chang Bum, Daejeon 34122 (KR); JANG, Yeong Cheol, Daejeon 34122 (KR); JUNG, Jea Bong, Daejeon 34122 (KR)
(74) Representative: Plasseraud IP
(86) International application number: PCT/KR2022/015903
(87) International publication number: WO 2023/068779

(57) **Abstract**

The present application provides a roll-type electrode body, a method for manufacturing same, and a process using the roll-type electrode body (a method for manufacturing a secondary battery). According to the present application, it is possible to provide a roll-type electrode body that can reduce loss generated in the conventional manufacturing process thereof and contribute to yield and productivity improvement, a method for manufacturing same, and a method for manufacturing a secondary battery by using same.

## Description

### [Technical Field]

### CROSS REFERENCE TO RELATED APPLICATION

This application claims the benefit of priority based on Korean Patent Application No. 10-2021-0139078, filed on October 19, 2021 and Korean Patent Application No. 10-2022-0134010, filed on October 18, 2022, and the entire contents of the Korean patent application are incorporated herein by reference.

### Technical Field

This application relates to a roll-type electrode body, a manufacturing method thereof, and a process using the same.

### [Background Art]

An application range of energy storage technology has expanded to an automobile and the like in addition to mobile devices, camcorders, laptops, and the like, and one research field of the energy storage technology is secondary batteries which can be charged and discharged.

An electrode assembly applied to a secondary battery basically includes a structure in which a positive electrode and a negative electrode having a stacked structure of a current collector and an active material layer are stacked with a separator interposed therebetween.

A manufacturing process of this secondary battery, specifically, a so-called roll-to-roll manufacturing process, can be performed while an electrode wound in a roll shape is unwound.

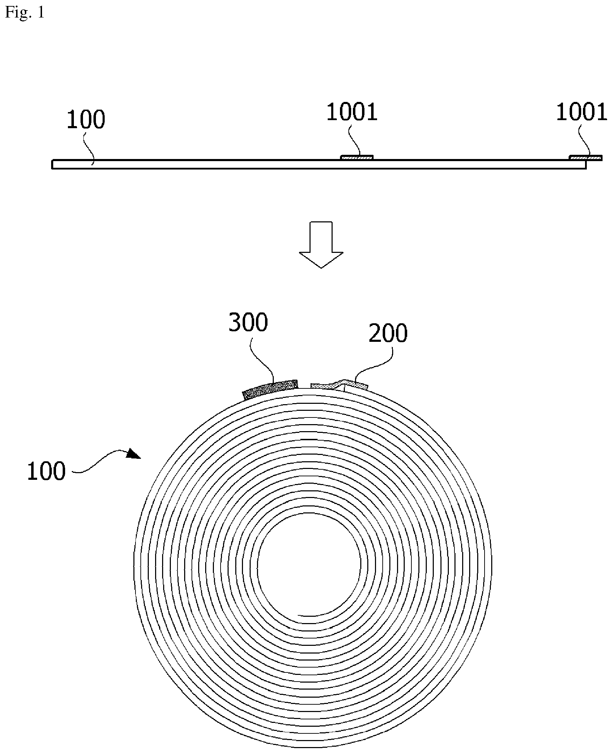

FIG. 1 illustrates a procedure of manufacturing a roll-type electrode applied to the above-described process. As shown in FIG. 1, an electrode 100 is wound in a roll shape, and a predetermined portion 1001 of the electrode is fixed by a cohesive or an adhesive tape 200 to maintain a wound shape of the electrode 100. Further, an additional double-sided tape 300 is attached, and this is attached for the purpose of connection with other rolls during the process.

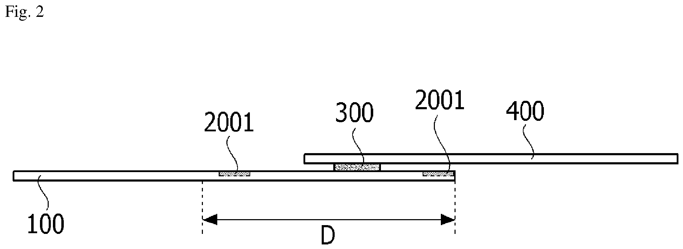

To perform the process, a form in which the roll-type electrode body shown in FIG. 1 is unwound and connected to another element 400 through the double-sided tape 300 is disclosed in FIG. 2. As shown in FIG. 2, when the roll-type electrode body of FIG. 1 is unwound, a trace 2001 of the tape 200 attached to fix the electrode body in the roll shape remains. Since a portion where the trace 2001 remains cannot be used, a portion of a section indicated as a dotted line arrow in FIG. 2 is discarded (a section to be discarded D), and accordingly, a portion which is wound at least once becomes a loss.

### [Disclosure]

### [Technical Problem]

This application relates to a roll-type electrode body, a manufacturing method thereof, and a process using the roll-type electrode body (a manufacturing method of a secondary battery). This application is directed to providing a roll-type electrode body capable of reducing losses generated from existing processes and contributing to improvement of yield and productivity, a manufacturing method thereof, and a manufacturing method of a secondary battery using the same.

### [Technical Solution]

This application relates to a roll-type electrode body.

The roll-type electrode body may include: an electrode wound in a roll shape; and a polymer film or sheet wound around the outside of the electrode wound in the roll shape.

In the roll-type electrode body, the electrode may include a current collector and an electrode active material layer formed on at least one surface of the current collector.

The roll-type electrode body may further include a double-sided pressure-sensitive adhesive tape or adhesive tape configured to attach the electrode wound in the roll shape and the polymer film or sheet. In the above, the double-sided pressure-sensitive adhesive tape or adhesive tape may be attached to at least one end of the electrode.

The roll-type electrode body may further include a cohesive or adhesive tape attached to the polymer film or sheet to maintain a wound state of the polymer film or sheet. The tape may be attached to one end and any other portion of the polymer film or sheet, or attached to one end and the other end of the polymer film or sheet. That is, when the polymer film or sheet is wound, and then both ends of the polymer film or sheet come into contact with each other in this state, the tape may fix the state in which the polymer film or sheet is wound while attached to the one end and the other end of the film or sheet. Further, when the polymer film or sheet is wound, and then both ends of the polymer film or sheet do not come into contact with each other and one end is wound over the other end in this state, the tape may fix the state in which the polymer film or sheet is wound while attached to the one end and any other portion of the film or sheet.

The roll-type electrode body may include an additional double-sided pressure-sensitive adhesive tape or adhesive tape attached to the polymer film or sheet. This tape may be attached to an opposite surface of a surface of the polymer film or sheet facing the electrode wound in the roll shape.

This application relates to a manufacturing method of a roll-type electrode body including: attaching an electrode and a polymer film or sheet; winding the electrode in a roll shape; and winding a polymer film or sheet around the electrode wound in the roll shape. An order of performing operations in the method is not specifically limited as long as a target roll-type electrode body is manufactured. For example, the polymer film or sheet may be attached to the electrode after rolling the electrode in the roll shape first, and a process of rolling after the attachment may also be performed.

In the above, the attachment of the electrode and the polymer film or sheet may be performed using a double-sided pressure-sensitive adhesive tape or adhesive tape.

In the above, the manufacturing method may further include fixing a wound shape of the polymer film or sheet wound around the electrode using a cohesive or adhesive tape.

The manufacturing method of the roll-type electrode body may further include attaching a double-sided pressure-sensitive adhesive tape or adhesive tape to the polymer film or sheet. The double-sided pressure-sensitive adhesive tape or adhesive tape may be attached to an opposite surface of a surface of the polymer film or sheet facing the electrode wound in the roll shape.

This application also relates to a method of manufacturing a secondary battery using the roll-type electrode body, and this method may include applying an electrode of the roll-type electrode body wound in a roll shape to a process while the electrode is unwound.

In the above, when the roll-type electrode body further includes a double-sided pressure-sensitive adhesive tape or adhesive tape configured to attach the electrode and the polymer film or sheet, the method may further include removing a portion of the electrode to which the double-sided pressure-sensitive adhesive tape or adhesive tape is attached.

Further, in the method, the roll-type electrode body may further include a double-sided pressure-sensitive adhesive tape or adhesive tape attached to an opposite surface of a surface of the polymer film or sheet facing the electrode wound in the roll shape, and accordingly, connecting the electrode to another element may be further included. In the above, the double-sided pressure-sensitive adhesive tape or adhesive tape may be attached to an opposite surface of a surface of the polymer film or sheet facing the electrode wound in the roll shape.

The method of manufacturing the secondary battery may be performed in a roll-to-roll process.

### [Advantageous Effects]

This application provides a roll-type electrode body, a manufacturing method thereof, and a process using the roll-type electrode body (a manufacturing method of a secondary battery). This application can provide a roll-type electrode body capable of reducing losses generated from existing processes and contributing to improvement of yield and productivity, a manufacturing method thereof, and a manufacturing method of a secondary battery using the same.

### [Description of Drawings]

FIGS. 1 and 2 are views for describing a roll-type electrode body of the related art.
FIG. 3 is a view illustrating an electrode body of this application.
FIG. 4 is a view for describing one end and the other end of an electrode, a polymer film, or the like.
FIGS. 5 and 6 are views illustrating a procedure of manufacturing the electrode body of this application.
FIG. 7 is a view illustrating a form in which the electrode body of this application is applied to a process.

### [Reference numerals]

100: electrode
1001: attachment portion of cohesive or adhesive tape
200, 300, 301, 302: cohesive or adhesive tape
2001: attachment trace of cohesive or adhesive tape
400: another element
500: polymer film or sheet
5000: electrode, polymer film, or polymer sheet
D: portion to be discarded

### [Modes of the Invention]

In the present specification, the term 'electrode body' may refer to a product including an electrode, a polymer film, or a polymer sheet to be described below, or a product in which two or more electrodes are directly connected or the two or more electrodes are connected through the polymer film or polymer sheet.

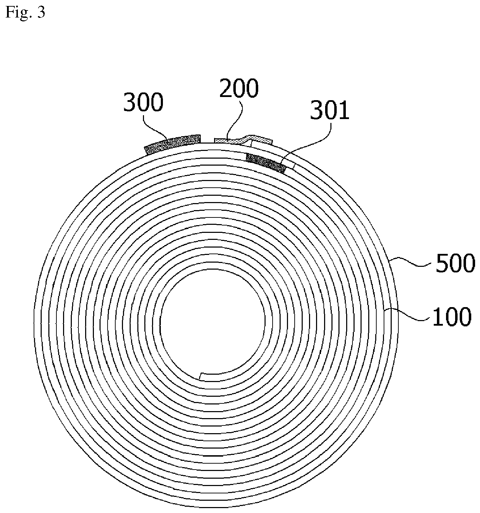

FIG. 3 is a conceptual diagram illustrating a roll-type electrode body of this application.

As shown in FIG. 3, the roll-type electrode body may include an electrode 100 wound in a roll shape, and a polymer film or sheet 500 (which may hereinafter be referred to as a polymer film or the like) wound around the outside of the electrode 100 wound in the roll shape.

The roll-type electrode body may further include a double-sided pressure-sensitive adhesive tape or adhesive tape 301 which attaches the electrode 100 wound in the roll shape and the polymer film or the like 500.

The double-sided pressure-sensitive adhesive tape or adhesive tape 301 may be attached to a surface of one end of the electrode 100 and an inner surface of the polymer film 500 or the like.

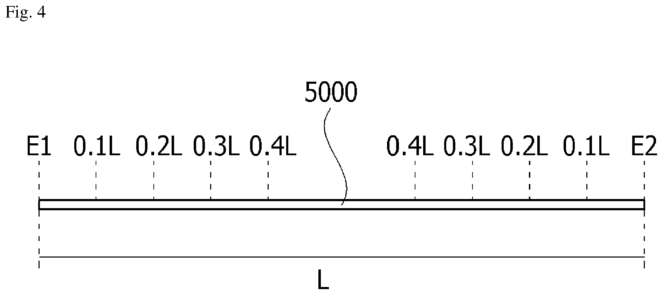

In the present specification, as shown in FIG. 4, one end of the electrode or the polymer film or the like is, for example, a region from one end portion E1 of the electrode or the polymer film or the like 5000 up to a length of 0.4 times (0.4L) (a region up to a 0.4L point from E1 in FIG. 4), up to a length of 0.3 times (0.3L) (a region up to a 0.3L point from E1 in FIG. 4), up to a length of 0.2 times (0.2L) (a region up to a 0.2L point from E1 in FIG. 4), or up to a length of 0.1 times (0.1L) (a region up to a 0.1L point from E1 in FIG. 4) of an entire length L of the electrode or the polymer film or the like. FIG. 4 is a view of a side surface of the electrode or the polymer film or the like 5000.

Further, in the present specification, when one end and the other end of the electrode or the polymer film or the like are mentioned together, the one end is one end of the electrode or the polymer film or the like, and the other end is the other end opposite the one end. For example, referring to FIG. 4, the region up to the 0.4L point from E1, the region up to the 0.3L point from E1, the region up to the 0.2L point from E1, or the region up to the 0.1L point from E1 in FIG. 4 is the one end, and a region up to a 0.4L point from E2, a region up to a 0.3L point from E2, a region up to a 0.2L point from E2, or a region up to a 0.1L point from E2 in FIG. 4 is the other end.

In the present specification, referring to FIG. 3, in the polymer film or the like, an inner surface may be a surface of the polymer film or the like 500 facing the electrode 100, and an outer surface may be a surface of the polymer film or the like 500 opposite the surface facing the electrode 100.

The roll-type electrode body may further include a cohesive or adhesive tape 200 attached to a surface of at least one end of the wound polymer film or the like 500 to fix the wound shape.

The cohesive or adhesive tape 200 may be attached to the outer surface of the polymer film or the like 500.

The cohesive or adhesive tape 200 may be attached to outer surfaces of both ends of the wound polymer film or sheet 500 to fix the wound shape, or may fix the wound shape while attaching the outer surface of one end and an outer surface of any other portion of the polymer film or sheet 500. That is, when both ends of the polymer film or sheet 500 come into contact with each other in a state in which the polymer film or sheet 500 is wound (a form in FIG. 3), the tape fixes the wound state while attached to the outer surfaces of one end and the other end of the polymer film or sheet. Further, when the polymer film or sheet is wound, and then both ends of the polymer film or sheet do not come into contact with each other and one end is wound over the other end, the tape fixes the wound state while attached to the outer surfaces of one end and any other portion of the film or sheet. Since the tape 200 which fixes the wound state does not need to be a double-sided pressure-sensitive adhesive tape or adhesive tape, the tape 200 may be a single-sided pressure-sensitive adhesive tape or adhesive tape.

As described above, the cohesive or adhesive tape 200 is attached to the outer surface of the polymer film 500 or the like, and is not attached to the electrode 100. Accordingly, a trace of the tape 200 may not be left on the electrode.

The roll-type electrode body may include an additional double-sided pressure-sensitive adhesive tape or adhesive tape 302 attached to the polymer film or the like 500. In the roll-type electrode body, this pressure-sensitive adhesive tape or adhesive tape 302 may be formed on the opposite surface (that is, the outer surface) of the surface of the polymer film or the like 500 facing the electrode 100 wound in the roll shape. This tape 302 may be used to connect the roll-type electrode body and another roll, or to connect the roll-type electrode body and another component in the process. The additional double-sided pressure-sensitive adhesive tape or adhesive tape 302 is attached to the outer surfaces of the polymer film or the like 500, and is not attached to the electrode 100. Accordingly, the trace of the tape 302 may not be left on the electrode.

The electrode 100, may be, for example, a negative electrode or a positive electrode used in the secondary battery, for example, the electrode at least may include a current collector and an electrode active material layer formed on one surface or both surfaces of the current collector.

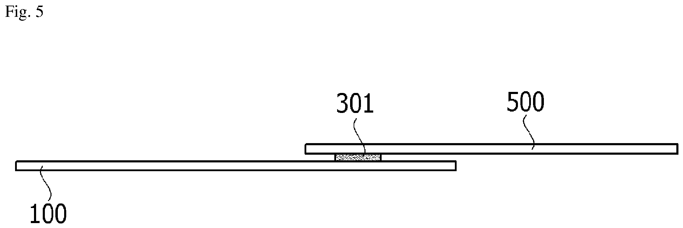

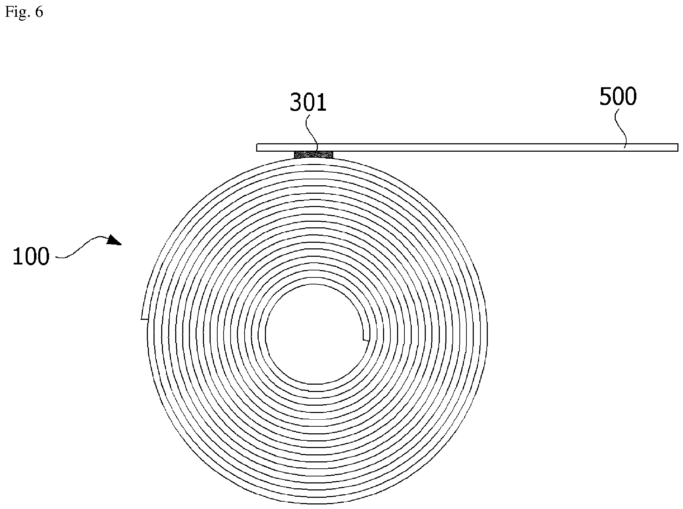

FIGS. 5 and 6 are views illustrating a procedure of manufacturing the roll-type electrode body shown in FIG. 3. However, a procedure to be described below is an example for manufacturing the roll-type electrode body of this application, and other appropriate methods through which the roll-type electrode body of this application can be manufactured in addition to the procedure to be described below may also be applied.

As shown in FIG. 5, in order to manufacture the roll-type electrode body, first, an end of the electrode 100 and an end of the polymer sheet or film 500 are attached and connected. In this case, a method of performing the attachment is not specifically limited, and attachment may be performed using, for example, a double-sided pressure-sensitive adhesive tape or adhesive tape 301.

Subsequently, as shown in FIG. 6, the electrode 100 is wound in the roll shape. Further, the roll-type electrode body as shown in FIG. 3 may be manufactured by winding the polymer sheet or film 500 around the electrode 100 which is wound again.

As shown in FIG. 3, the wound shape of the wound polymer sheet or film 500 to fix the roll shape may be fixed using the pressure-sensitive adhesive tape or adhesive tape 200 as necessary.

In the process of manufacturing the electrode body, forming a double-sided pressure-sensitive adhesive tape or adhesive tape 302 on the polymer film or sheet 500 may be further performed as necessary. In the roll-type electrode body, the cohesive or adhesive tape 302 may be attached to an opposite surface of the surface of the polymer film or sheet 500 facing the electrode 100 wound in the roll shape.

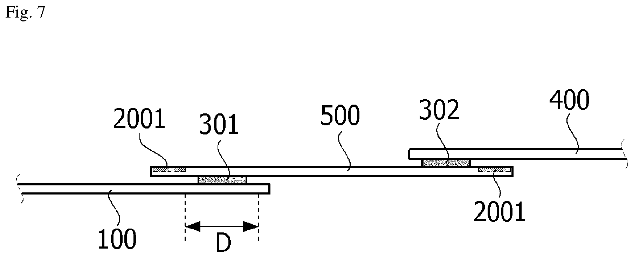

FIG. 7 illustrates a form of connection with another element 400 (for example, another electrode or the like) through the double-sided pressure-sensitive adhesive tape or adhesive tape 302 of the electrode body as one form in a procedure in which the process is performed while the roll-type electrode body having the form shown in FIG. 3 is unwound. As shown in the drawing, when the electrode body of this application is applied, traces 2001 of the pressure-sensitive adhesive tape or adhesive tape 200 attached to the electrode 100 to maintain the roll shape are not formed on the electrode 100 and are formed on the polymer film or sheet 500 even when the electrode 100 wound in the roll shape is unwound. Accordingly, in this case, only a portion where the double-sided tape 301 attached to the electrode 100 for connection with the polymer film or sheet 500 is present (a section to be discarded D indicated by a dotted line arrow in the drawing) needs to be discarded. Accordingly, when the electrode assembly of this application is applied, losses generated during the process may be remarkably reduced compared to existing processes, and the manufacturing process of the secondary battery may progress with relatively excellent yield and productivity.

As described above, this application relates to an electrode body formed in the procedure in which the process is performed while the roll-type electrode body is unwound, and specifically, to an electrode body of which another element (400 in FIG. 7) is an electrode.

As shown in FIG. 7, the electrode body may include a first electrode 100, a polymer film 500 or the like, and a second electrode 400.

The first electrode 100 and the polymer film or the like 500 described above may be connected to each other by a double-sided pressure-sensitive adhesive tape or adhesive tape 301 (hereinafter, referred to as a first pressure-sensitive adhesive tape or adhesive tape), and the second electrode 400 and the polymer film or the like 500 may be connected to each other by a double-sided pressure-sensitive adhesive tape or adhesive tape 302 (hereinafter, referred to as a second pressure-sensitive adhesive tape or adhesive tape).

In the above, the first double-sided pressure-sensitive adhesive tape or adhesive tape 301 may be attached to a surface of one end of the first electrode 100 and an inner surface of one end of the polymer film or the like 500.

Further, the second double-sided pressure-sensitive adhesive tape or adhesive tape 302 may be attached to a surface of one end of the second electrode 400 and an outer surface of the other end of the polymer film or the like 500.

Configurations applied to the roll-type electrode body of this application are not specifically limited, and known materials may be appropriately applied.

For example, a film, a sheet, or a foil, which is a known current collector, formed of stainless steel, that is, stainless steel surface-treated with aluminum, nickel, titanium, baked carbon, copper, carbon, nickel, titanium or silver, an aluminumcadmium alloy, or the like may be used as a current collector which is a configuration of the electrode. Known treatment such as surface treatment may be performed on the current collector.

The thickness, shape, and the like of the current collector are not specifically limited, and an appropriate type is selected from a known range.

There is no specific limitation on the type of the electrode active material layer formed on one surface or both surfaces of the current collector, and a layer including at least an electrode active material and a binder may be used as a known material.

Any known material may be used as the binder, and components known to contribute to binding of components such as active materials and the like in the active material layer, and binding of the active material layer and the current collector may be used as the binder. One or a combination of two or more selected from poly(vinylidene fluoride) (PVDF), poly(vinyl alcohol) (PVA), polyvinylpyrrolidone, tetrafluoroethylene, polyethylene, polypropylene, an ethylene-propylene-diene terpolymer (EPDM), a sulfonated EPDM, styrene-butadiene rubber (SBR), fluorine rubber, and other known binders may be used as an applicable binder.

The electrode active material included in the active material layer may be a positive electrode active material or a negative electrode active material, and a specific type is not specifically limited. For example, an active material including LiCoO₂, LiNiO₂, LiMn₂O₄, LiCoPO₄, LiFePO₄, LiNiMnCoO₂, LiNi_{1-x-yz}CoₓM1_{y}M2_{z}O₂ (each of M1 and M2 is any one selected from the group consisting of Al, Ni, Co, Fe, Mn, V, Cr, Ti, W, Ta, Mg, and Mo independently of each other, and x, y, and z are each independently atomic fractions of oxide composition elements and satisfy 0 ≤ x < 0.5, 0 ≤ y < 0.5, 0 ≤ z < 0.5, and 0 < x+y+z ≤ 1), and the like may be used as the positive electrode active material, and an active material including: natural graphite, artificial graphite, or a carbonaceous material; metals (Me) such as a lithium-containing titanium composite oxide (LTO), Si, Sn, Li, Zn, Mg, Cd, Ce, Ni or Fe; alloys composed of the metals (Me); oxides (MeOₓ) of the metals (Me); a composite of the metals (Me) and carbon; and the like may be used as the negative electrode active material.

For example, the active material in the active material layer may be in a range of 1000 to 10000 parts by weight based on 100 parts by weight of the binder. In other examples, the ratio may be 1500 parts by weight or more, 2000 parts by weight or more, 2500 parts by weight or more, 3000 parts by weight or more, 3500 parts by weight or more, 4000 parts by weight or more, or 4500 parts by weight or more, or 9500 parts by weight or less, 9000 parts by weight or less, 8500 parts by weight or less, 8000 parts by weight or less, 7500 parts by weight or less, 7000 parts by weight or less, 6500 parts by weight or less, 6000 parts by weight or less, 5500 parts by weight or less, 5000 parts by weight or less, 4500 parts by weight or less, 4000 parts by weight or less, 3500 parts by weight or less, 3000 parts by weight or less, or 2500 parts by weight or less.

The active material layer may include other necessary components in addition to the components described above. For example, the active material layer may further include a conductive material. Any known component which exhibits conductivity without causing a chemical change of the current collector and the electrode active material may be used as the conductive material without limitation. For example, one or a mixture of two or more selected from: graphite such as natural graphite, artificial graphite or the like; carbon black such as carbon black, acetylene black, ketjen black, channel black, furnace black, lamp black, summer black, or the like; a conductive fiber such as a carbon fiber, a metal fiber, or the like; metal powder such as carbon fluoride, aluminum, nickel powder, or the like; zinc oxide; a conductive whisker such as potassium titanate or the like; and a conductive metal oxide-based polyphenylene derivative such as titanium oxide or the like may be used as the conductive material.

The content of the conductive material is controlled as necessary and is not specifically limited, but it may be generally included in an appropriate ratio in a range of 0.1 to 20 parts by weight or 0.3 to 12 parts by weight based on 100 parts by weight of the active material. A method of determining the content of the conductive material at an appropriate level in consideration of a cycle life or the like of a battery is known.

The active material layer may include other known components (for example, a thickener such as carboxymethyl cellulose (CMC), starch, hydroxypropyl cellulose, regenerated cellulose, or the like, and the like) which are necessary in addition to the components described above.

A thickness of the active material layer is not specifically limited, and it may be controlled to have a thickness of an appropriate level in consideration of desired performance.

For example, the thickness of the active material layer may be in a range of approximately 10 to 500 µm. In other examples, the thickness may be approximately 30 µm or more, 50 µm or more, 70 µm or more, 90 µm or more, or 100 µm or more, or approximately 450 µm or less, 400 µm or less, 350 µm or less, 300 µm or less, 250 µm or less, 200 µm or less, or 150 µm or less.

The active material layer may be formed to have a constant level of porosity. The porosity is usually controlled by rolling in the manufacturing procedure of the electrode. The porosity of the active material layer may be approximately 35% or less. The porosity may be additionally adjusted in a range of 33% or less, 31% or less, 29% or less, or 27% or less and/or 5% or more, 7% or more, 9% or more, 11% or more, 13% or more, 15% or more, 17% or more, 19% or more, 21% or more, 23% or more, or 25% or more.

This electrode may be manufactured, for example, by coating a slurry including the active material or the like on the current collector, and then performing drying and rolling processes and the like. This slurry may include a solvent together with the active material, the binder, and the like.

A method of applying the slurry on a surface of the current collector is not specifically limited, and known application methods, for example, methods such as spin coating, comma coating, bar coating, and the like may be applied.

Any known polymer film or sheet may be used as the polymer film or sheet applied to the roll-type electrode body without specific limitation. For example, a known film such as a polycarbonate film or sheet, a polyester film such as a poly(ethylene terephthalate) (PET) film or sheet, a polyolefin film or sheet such as a polyethylene or polypropylene film or sheet, an acrylic polymer film or sheet such as a poly(methylmethacrylate) (PMMA) film or sheet, or the like may be applied.

There is no specific limitation on the thickness of this film or sheet.

Further, a known appropriate pressure-sensitive adhesive tape or adhesive tape used in a related art may be selected and used as the double-sided or single-sided pressure-sensitive adhesive tape or adhesive tape which is applied.

## Claims

1. A roll-type electrode body, comprising:
an electrode wound in a roll shape; and
a polymer film or sheet wound around an outside of the electrode wound in the roll shape.

2. The roll-type electrode body of claim 1, wherein the electrode comprises a current collector and an electrode active material layer formed on at least one surface of the current collector.

3. The roll-type electrode body of claim 1 or 2, further comprising a double-sided pressure-sensitive adhesive tape or adhesive tape configured to attach the electrode wound in the roll shape and the polymer film or sheet.

4. The roll-type electrode body of claim 3, wherein the double-sided pressure-sensitive adhesive tape or adhesive tape attaches a surface of one end of the electrode and an inner surface of the polymer film or sheet.

5. The roll-type electrode body of any one of claims 1 to 4, further comprising a pressure-sensitive adhesive tape or adhesive tape attached to the polymer film or sheet to maintain the wound state of the polymer film or sheet.

6. The roll-type electrode body of claim 5, wherein the pressure-sensitive adhesive tape or adhesive tape is attached to an outer surface of the polymer film or sheet, and is not attached to the electrode.

7. The roll-type electrode body of any one of claims 1 to 6, further comprising a double-sided pressure-sensitive adhesive tape or adhesive tape attached to the outer surface of the polymer film or sheet.

8. The roll-type electrode body of claim 7, wherein the double-sided pressure-sensitive adhesive tape or adhesive tape attached to the outer surface of the polymer film or sheet is not attached to the electrode.

9. A manufacturing method of a roll-type electrode body, comprising:
attaching an electrode and a polymer film or sheet;
winding the electrode in a roll shape; and
winding the polymer film or sheet around the electrode wound in the roll shape.

10. The manufacturing method of claim 9, wherein the attaching of the electrode and the polymer film or sheet is performed by a double-sided pressure-sensitive adhesive tape or adhesive tape.

11. The manufacturing method of claim 9 or 10, further comprising fixing a wound shape of the polymer film or sheet wound around the electrode using a cohesive or adhesive tape.

12. The manufacturing method of any one of claims 9 to 11, further comprising attaching a double-sided pressure-sensitive adhesive tape or adhesive tape to an opposite surface of a surface of the polymer film or sheet facing the electrode wound in the roll shape.

13. An electrode body comprising:
a first electrode;
a polymer film or sheet; and
a second electrode,
wherein the first electrode and the polymer film or sheet are connected through a first double-sided pressure-sensitive adhesive tape or adhesive tape attached to a surface of one end of the first electrode and an inner surface of one end of the polymer film or sheet, and
wherein the second electrode and the polymer film or sheet are connected through a double-sided pressure-sensitive adhesive tape or adhesive tape attached to a surface of one end of the second electrode and an outer surface of the other end of the polymer film or sheet.

14. A method of manufacturing a secondary battery using the roll-type electrode body of claim 1, the method comprising applying an electrode wound in a roll shape to a process while the electrode is unwound.

15. The manufacturing method of claim 14, wherein:
the roll-type electrode body further includes a double-sided pressure-sensitive adhesive tape or adhesive tape configured to attach the electrode and a polymer film or sheet; and
removing a portion of the electrode to which the double-sided pressure-sensitive adhesive tape or adhesive tape is attached is further performed.

16. The manufacturing method of claim 14 or 15, wherein:
the roll-type electrode body further includes a double-sided pressure-sensitive adhesive tape or adhesive tape attached to an opposite surface of a surface of the polymer film or sheet facing the electrode wound in the roll shape; and
connecting the electrode to another element through the double-sided pressure-sensitive adhesive tape or adhesive tape is further performed.

17. The manufacturing method of any one of claims 14 to 16, which is a roll-to-roll process.
